# EUROPEAN PATENT SPECIFICATION

(11) **EP 3 493 512 B1**
(45) Date of publication and mention of the grant of the patent: **24.06.2020**
(21) Application number: 19152335.6
(22) Date of filing: 31.08.2016
(51) Int. Cl.: H04M 1/725, H04M 1/02, G06F 1/16, H01M 2/10, H04M 19/04, H04B 1/3827, F21S 9/02, G09G 5/00, H04B 1/3888, H04M 1/05, H05B 33/08, A63F 13/212, A63F 13/98, A63F 13/285, F21Y 115/10

(54) **COMMUNICATION APPARATUS WITH ENGAGEMENT PORTION FOR ONE OF A PLURALITY OF ATTACHMENTS**
KOMMUNIKATIONSVORRICHTUNG MIT AUFNAHMEEINRICHTUNG FÜR EINES VON MEHREREN ANBAUTEILEN
APPAREIL DE COMMUNICATION AVEC UNE PARTIE D'ENGAGEMENT POUR UN D'UNE PLURALITÉ D'ATTACHEMENTS

(30) Priority: 09.09.2015 JP 2015177604
(43) Date of publication of application: 05.06.2019
(62) Divisional of application: 16186469.9
(73) Proprietor: NINTENDO CO., LTD., Kamitoba, Minami-ku Kyoto 601-8501 (JP)
(72) Inventor: NAKAMURA, Kosuke, Kyoto, 601-8501 (JP); OKAMURA, Takanori, Kyoto, 601-8501 (JP); KUMAZAKI, Daisuke, Kyoto, 601-8501 (JP); FUJINO, Takaki, Kyoto, 601-8501 (JP); MARUYAMA, Kazuhiro, Kyoto, 601-8501 (JP)
(74) Representative: Karl, Christof

(56) References cited:
- EP-A2- 2 733 597
- US-A1- 2002 167 489
- US-A1- 2014 073 262
- US-A1- 2014 116 085

## Description

### BACKGROUND OF THE INVENTION

### Field Of The Invention

The present invention relates to a communication apparatus and a battery cover, and in particular, relates to a communication apparatus for communicating with another apparatus and a battery cover for covering a battery attachment portion of the communication apparatus.

### Description of the Background Art

Conventionally, for example, as disclosed in Japanese Unexamined Patent Application Publication No. 2014-102920 (hereinafter referred to as "Patent Literature 1"), an attachable and detachable battery cover for covering a battery accommodation portion of an electronic apparatus is provided. For example, a user of the electronic apparatus removes the battery cover and thereby can detach or attach from or to a battery of the electronic apparatus.

The battery cover, however, merely covers the battery accommodation portion of the electronic apparatus to prevent an accommodated battery from coming off, and also allows the replacement of the battery. The battery cover does not expand the use of the electronic apparatus.

US 2014/073262 A1 relates to a systems and methods of loss prevention, discovery, and tracking of personal belongings through the use of wireless hardware and mobile electronic devices such as smartphones, tablet computers, and portable computers. One method may include receiving a wireless communication from a wireless apparatus attached to an object, determining a signal strength reading from the communication, determining if the signal strength reading is below an adaptable alert threshold, and if the signal strength reading is below the alert threshold, alerting a user.

US 2002/167489 A1 relates to an apparatus for controlling the position of a screen pointer for an electronic device having a display screen. The apparatus includes a pushbutton for selecting an item displayed on the display screen. The pushbutton includes an imaging surface against which a portion of the tip of a human digit may be placed. A light source illuminates that portion of the tip of the digit that is placed against the imaging surface, thereby generating reflected images. The apparatus includes a motion transducer. A lens receives the reflected images and directs the reflected images onto the motion transducer. The motion transducer generates digital representations of the reflected images. The motion transducer generates a first set of movement data based on the digital representations of the reflected images. The first set of movement data is indicative of motion of the tip of the digit across the imaging surface.

EP 2 733 597 A2 relates to presenting on a display of an apparatus a first screen that corresponds to a first mode of the apparatus. The first screen is in a first level of a graphical user interface (GUI) hierarchy and occupies a substantial portion of the display when presented. In response to a transition event at the first screen, the processors present a second screen that corresponds to a second mode of the apparatus. The second screen is in the first level of the GUI hierarchy and occupies the substantial portion of the display when presented. In response to a selection event at the first screen, the processors present a third screen that corresponds to a first function of the first mode of the apparatus.

US 2014/116085 A1 relates to a wearable communication device including a necklace having an integrated first power source, and a telecommunications device having a transceiver configured to allow wireless communication, wherein the telecommunications device is configured to couple and decouple with the necklace, and wherein the telecommunications device is configured to receive power from the first power source when coupled with the necklace.

### SUMMARY OF THE INVENTION

Therefore, it is an object of the present invention to provide a communication apparatus as defined by the independent claim. Preferred embodiments of the invention are stipulated in the dependent claims. While several embodiments and/or examples have been disclosed in this description, the subject-matter for which protection is sought is strictly and solely limited to those embodiments and/or examples encompassed by the scope of the appended claims. Embodiments and/or examples mentioned in the description that do not fall under the scope of the claims are useful for understanding the invention.

To achieve the above object, the present invention can employ, for example, the following configurations. It should be noted that it is understood that, to interpret the descriptions of the claims, the scope of the claims should be interpreted only by the descriptions of the claims. If there is a conflict between the descriptions of the claims and the descriptions of the specification, the descriptions of the claims take precedence.

In an exemplary configuration of a battery cover according to the present invention, a battery cover covers a battery accommodation portion in a main body of a communication apparatus and to detach or attach a battery from or to the communication apparatus. The battery cover includes a band threading portion and an engagement portion. Through the band threading portion, a band member can pass. The engagement portion is detachably engageable with the main body of the communication apparatus.

Based on the above, it is possible to form a communication apparatus through which a band member can pass, by attaching the communication apparatus as a battery cover to a main body of the communication apparatus. Further, it is possible to form a battery cover having a function (e.g., a band fastening function) different from the function of covering a battery accommodation portion so that a battery is detachable from and attachable to the communication apparatus.

In addition, the battery cover may further include a part of at least one screwing mechanism. The part of the screwing mechanism is screwed to the main body of the communication apparatus to fix the battery cover to the main body of the communication apparatus.

Based on the above, it is possible to firmly fix the battery cover to the main body of the communication apparatus by screwing the battery cover with the main body of the communication apparatus.

In addition, the part of the at least one screwing mechanism may be a male screw thread that can be screwed to a female screw thread in the main body of the communication apparatus.

Based on the above, a male screw thread is included, whereby it is possible to easily form a screwing mechanism screwed to the main body of the communication apparatus.

In addition, the groove in the head of the male screw thread or the outer shape of the head may be different from the groove in the head of a male screw thread used in the main body of the communication apparatus or the outer shape of the head.

Based on the above, it is not possible to detach or attach a male screw thread used in the main body of the communication apparatus, using a tool for detaching or attaching the male screw thread of the screwing mechanism. Thus, it is possible to prevent the main body of the communication apparatus from being easily disassembled.

In addition, the groove in the head of the male screw thread of the screwing mechanism may be a plus shape or a minus shape. The groove in the head of the male screw thread used in the communication apparatus main body may be a Y-shape.

Based on the above, it is not possible to detach or attach a male screw thread used in the main body of the communication apparatus by using a Phillips screwdriver or a slotted screwdriver for detaching or attaching the male screw thread of the screwing mechanism. Thus, it is possible to prevent the main body of the communication apparatus from being easily disassembled.

In addition, the groove in the head of the male screw thread of the screwing mechanism or the outer shape of the head may be at least different from the groove in the head of a male screw thread exposed to the outside in the main body of the communication apparatus when the battery cover is removed from the main body of the communication apparatus, or the outer shape of the head.

Based on the above, it is not possible to detach or attach a male screw thread exposed to the outside in the main body of the communication apparatus by using a tool for detaching or attaching the male screw thread of the screwing mechanism. Thus, it is possible to prevent the main body of the communication apparatus from being easily disassembled.

In addition, the part of the at least one screwing mechanism may be a hole through which a male screw thread can be passed to be screwed to a female screw thread in the main body of the communication apparatus, and which has an inner diameter greater than a nominal diameter of the male screw thread.

Based on the above, it is possible to easily pass through the battery cover a male screw thread included in a screwing mechanism.

In addition, the part of the at least one screwing mechanism may be a female screw thread configured to be screwed to a male screw thread in the main body of the communication apparatus.

Based on the above, a female screw thread is formed, whereby it is possible to easily form a screwing mechanism screwed to the main body of the communication apparatus.

In addition, the battery cover may further include at least one latch portion. When a positional relationship between the at least one latch portion and the main body of the communication apparatus satisfies a particular relationship, the latch portion is latched with the main body of the communication apparatus. In this case, the battery cover may be configured to be fixed to the main body of the communication apparatus by the at least one screwing mechanism and the at least one latch portion.

Based on the above, it is possible to firmly fix the battery cover to the main body of the communication apparatus by a part of a screwing mechanism and a latch portion.

In addition, the part of one of the at least one screwing mechanism and one of the at least one latch portion may be at positions on opposite sides via the battery accommodation portion when the one of the at least one screwing mechanism and the one of the at least one latch portion are attached to the main body of the communication apparatus.

Based on the above, the part of the screwing mechanism and the latch portion are provided at positions on opposite sides via a battery accommodation portion when the screwing mechanism and the latch portion are attached to the main body of the communication apparatus, whereby it is possible to certainly cover the battery accommodation portion with the battery cover.

In addition, a direction that connects a position of the part of the one of the at least one screwing mechanism and a position of the at least one latch portion may be almost parallel with a passing-through direction of the band member when the band member is passed through the band threading portion.

Based on the above, even under stress of the band member, it is possible to stably maintain the state where the battery cover is fixed to the main body of the communication apparatus.

In addition, a protruding piece may be configured to be engaged with a protruding portion in the main body of the communication apparatus. In this case, the part of the at least one screwing mechanism may be in the protruding piece.

Based on the above, the work for detaching or attaching a male screw thread of a screwing mechanism is facilitated.

In addition, a flat surface portion for, when an engagement portion is engaged with the main body of the communication apparatus, joining with a packing in the main body of the communication apparatus to tightly close an accommodation portion for accommodating a battery may be formed.

Based on the above, it is possible to tightly close the accommodation portion with the battery cover with certainty.

In addition, the battery cover may further include at least two threading holes in the band threading portion that are configured to pass the band member therethrough.

Based on the above, it is possible to stably attach a band member to the battery cover.

In addition, in the band threading portion, a single band member may be passed through two threading holes.

Based on the above, it is possible to stably attach the communication apparatus with the band member.

In addition, in the band threading portion, at least two threading holes for passing through the band member may be formed. In this case, the part of the screwing mechanism may be between the two threading holes.

Based on the above, it is possible to cover the screwing mechanism with the band member.

In addition, the band threading portion may be formed of a predetermined resin.

Based on the above, it is possible to easily form the band threading portion.

In addition, the shape of the battery cover may almost coincide with an outer frame shape of the main body of the communication apparatus.

Based on the above, it is possible to make a connection portion with the battery cover less noticeable.

In addition, the battery cover may further include a band member passed through the band threading portion.

Based on the above, it is possible to form a battery cover having a band member.

In addition, the band member may be in a ring shape. The band member may include a size adjustment mechanism configured to adjust a size of the ring shape.

Based on the above, a user of the communication apparatus can adjust the size of the ring diameter of the band member.

In addition, the ring size adjustment mechanism may be able to adjust the size of the ring in a stepless manner.

Based on the above, it is possible to adjust the ring diameter of the band member to a size desired by the user.

In addition, the ring size adjustment mechanism may include a clamping mechanism. The clamping mechanism is in a part of the band member, and any other portion of the band member is clamped, whereby it is possible to adjust the ring diameter in a stepless manner.

Based on the above, it is possible to easily form a ring size adjustment mechanism that can adjust the ring diameter in a stepless manner.

In addition, the band member may further include a fixing member configured to fix a front end portion of the band member left from a ring-shaped band member.

Based on the above, it is possible to fix an end portion of the band member.

In addition, the band member may be made of a fiber.

Based on the above, it is possible to stably attach a attachment target in accordance with the shape of the attachment target.

In another exemplary configuration of a battery cover according to the present invention, a battery cover covers a battery accommodation portion in a main body of a communication apparatus to detach or attach a battery from or to the communication apparatus. The battery cover includes a clip, an engagement portion, and a fixing mechanism. The engagement portion is detachably engaged with the main body of the communication apparatus. The fixing mechanism is fixed in a state of being engaged with the main body of the communication apparatus. The fixing mechanism includes a part of a screwing mechanism on one side and a latch portion on the other side or a part of a screwing mechanism on the other side. The part of the screwing mechanism on one side is on one side, which is an opposite side via the battery accommodation portion when the screwing mechanism is attached to the main body of the communication apparatus, and is screwed to the main body of the communication apparatus to fix the battery cover to the main body of the communication apparatus. The latch portion on the other side is on the other side, which is an opposite side via the battery accommodation portion when the latch portion is attached to the main body of the communication apparatus, and when a positional relationship between the latch portion and the main body of the communication apparatus satisfies a particular relationship, is latched with the main body of the communication apparatus. The part of the screwing mechanism on the other side is on the other side, which is an opposite side via the battery accommodation portion when the screwing mechanism is attached to the main body of the communication apparatus, and is screwed to the main body of the communication apparatus to fix the battery cover to the main body of the communication apparatus. A direction of connecting a position where the part of the screwing mechanism on one side is provided and a position where the latch portion on the other side or the part of the screwing mechanism on the other side is provided is almost parallel with a direction in which the clip is provided so as to extend.

Based on the above, it is possible to form a communication apparatus that can be attached by being clamped by a clip, by attaching the communication apparatus as a battery cover to a main body of the communication apparatus. Further, it is possible to form a communication apparatus including a battery cover having a function (e.g., a clip function) different from the function of covering a battery accommodation portion so that a battery is detachable from and attachable to the communication apparatus. Further, even under stress of the clip, it is possible to stably maintain the state where the battery cover is fixed to the main body of the communication apparatus.

In addition, the clip may be on an outer surface of a cover portion of the battery cover and clamp another member between a part, opposed to the outer surface, in the clip and the outer surface, whereby it may be possible to cause the member to clamp the battery cover. The clip may include a pillar portion that is provided so as to stand on the outer surface of the cover portion of the battery cover and supports the side, opposed to the outer surface, of the clip.

Based on the above, it is possible to form a clip in a free shape, and it is also easy to open and close the clip.

In addition, in the clip, a hole portion to which a strap can be attached may be formed.

Based on the above, it is possible to form a communication apparatus that allows a strap to attach thereto, by attaching the communication apparatus as a battery cover to a main body of the communication apparatus.

In addition, the hole portion may be at a position opposite in a direction in which the clip opens to clamp another member.

Based on the above, even if the communication apparatus is attached using a strap, it is possible to attach the communication apparatus without impairing the design qualities in the same direction as that in a case where the communication apparatus is attached by being clamped by the clip.

In addition, the clip may include a pillar portion that supports the clip against the outer surface of the cover portion of the battery cover. The hole portion may be at a position opposite across the pillar portion in a direction in which the clip opens to clamp another member.

Based on the above, when a communication apparatus is attached using a strap, it is possible to stably attach the communication apparatus.

In addition, the clip may be on the outer surface side of the battery cover and clamps another member between a part, opposed to the outer surface, in the clip and the outer surface, and thereby may be able to cause the member to clamp the battery cover. The part of the screwing mechanism may be at a position that does not overlap the clip when the outer surface is viewed from front.

Based on the above, the work for detaching or attaching the male screw thread of the screwing mechanism is facilitated.

In addition, the shape of the battery cover may almost coincide with an outer frame shape of the main body of the communication apparatus.

Based on the above, it is possible to make a connection portion with a battery cover less noticeable.

In addition, in the battery cover, a flat surface portion for, when an engagement portion is engaged with the main body of the communication apparatus, joining with a packing in the main body of the communication apparatus to tightly close the accommodation portion for accommodating a battery may be formed.

Based on the above, it is possible to tightly close the accommodation portion with the battery cover with certainty.

In addition, the part of the screwing mechanism on one side and/or the part of the screwing mechanism on the other side may be a male screw thread that can be screwed to a female screw thread in the main body of the communication apparatus.

Based on the above, a male screw thread is included, whereby it is possible to easily form a screwing mechanism screwed to the main body of the communication apparatus.

In addition, the groove in the head of the male screw thread or the outer shape of the head may be different from the groove in the head of a male screw thread used in the main body of the communication apparatus or the outer shape of the head.

Based on the above, it is not possible to detach or attach a male screw thread used in the main body of the communication apparatus by using a tool for detaching or attaching the male screw thread of the screwing mechanism. Thus, it is possible to prevent the main body of the communication apparatus from being easily disassembled.

In addition, the groove in the head of the male screw thread of the screwing mechanism may be a plus shape or a minus shape. The groove in the head of the male screw thread used in the communication apparatus main body may be a Y-shape.

Based on the above, it is not possible to detach or attach a male screw thread used in the main body of the communication apparatus by using a Phillips screwdriver or a slotted screwdriver for detaching or attaching the male screw thread of the screwing mechanism. Thus, it is possible to prevent the main body of the communication apparatus from being easily disassembled.

In addition, the groove in the head of the male screw thread of the screwing mechanism or the outer shape of the head may be at least different from the groove in the head of a male screw thread exposed to the outside in the main body of the communication apparatus when the battery cover is removed from the main body of the communication apparatus, or the outer shape of the head.

Based on the above, it is not possible to detach or attach a male screw thread exposed to the outside in the main body of the communication apparatus by using a tool for detaching or attaching the male screw thread of the screwing mechanism. Thus, it is possible to prevent the main body of the communication apparatus from being easily disassembled.

In addition, the part of the screwing mechanism on one side and/or the part of the screwing mechanism on the other side may be a hole portion through which a male screw thread that can be screwed to a female screw thread in the main body of the communication apparatus can pass, and which has an inner diameter greater than the nominal diameter of the male screw thread.

Based on the above, it is possible to easily pass a male screw included in a screwing mechanism through the battery cover.

In addition, the part of the screwing mechanism on one side and/or the part of the screwing mechanism on the other side may be a female screw thread formed so as to be screwed to a male screw thread in the main body of the communication apparatus.

Based on the above, a female screw thread is formed, whereby it is possible to easily form a screwing mechanism screwed to the main body of the communication apparatus.

In addition, in the battery cover, a protruding piece engaged with a protruding portion in the main body of the communication apparatus may be formed. The part of the screwing mechanism on one side and/or the part of the screwing mechanism on the other side may be in the protruding piece.

Based on the above, the work for detaching or attaching the male screw thread of the screwing mechanism is facilitated.

In addition, the clip may be on an outer surface of the battery cover and clamp another member between a part, opposed to the outer surface, in the clip and the outer surface, whereby it may be possible to cause the member to clamp the battery cover. The shape of the clip may almost coincide with an outer frame shape of the main body of the communication apparatus except for the protruding portion as viewed from the outer surface side.

Based on the above, it is possible to secure a relatively large clip area.

In an exemplary configuration of a communication apparatus according to the present invention, a communication apparatus is capable of communicating with another apparatus. The communication apparatus includes an engagement portion, a communicator, and a vibrator. The engagement portion is detachably engaged with one of a plurality of types of attachments in a selective manner. The communicator communicates with the other apparatus. The vibrator vibrates in accordance with a signal received from the other apparatus.

Based on the above, it is possible to form a communication apparatus to which an attachment corresponding to use can be selectively attached.

In addition, the communication apparatus may further include a light-emitting diode and a light emission controller. The light emission controller controls light emission of the light-emitting diode in accordance with the signal received from the other apparatus by the communicator.

Based on the above, it is possible to notify a user of information by the light emission of a light-emitting diode.

In addition, the light-emitting diode may be configured to emit light of a plurality of colors. The light emission controller may be configured to control a light emission color of the light-emitting diode in accordance with the signal received from the other apparatus by the communicator.

Based on the above, it is possible to notify the user of information by the light emission color of the light-emitting diode.

In addition, the communication apparatus may further include an operation button on which a user can perform a pressing operation. In this case, the light-emitting diode may be built into the operation button.

Based on the above, it is possible to achieve a communication apparatus for receiving a user operation.

In addition, the communication apparatus may further include a single operation button on which a user can perform a pressing operation.

Based on the above, it is possible to form a relatively small communication apparatus.

In addition, the communicator may be configured to transmit a signal to the other apparatus indicating that the operation button is subjected to a pressing operation when the operation button is pressed.

Based on the above, it is possible to output information corresponding to a user operation.

In addition, the communication apparatus may further include a part of at least one screwing mechanism configured to be screwed to the attachment to fix the attachment to a main body of the communication apparatus.

Based on the above, it is possible to firmly fix an attachment to a main body of a communication apparatus by screwing to the attachment.

In addition, the part of the screwing mechanism may be a male screw thread that can be screwed to a female screw thread in an attachment.

Based on the above, a male screw thread is included, whereby it is possible to easily form a screwing mechanism screwed to an attachment.

In addition, the part of the screwing mechanism may be a hole portion through which a male screw thread that can be screwed to a female screw thread in the attachment can pass, and which has an inner diameter greater than a nominal diameter of the male screw thread.

Based on the above, it is possible to easily pass a male screw included in a screwing mechanism through the communication apparatus.

In addition, the part of the screwing mechanism may be a female screw thread formed so as to be screwed to a male screw thread in the attachment.

Based on the above, a female screw thread is formed, whereby it is possible to easily form a screwing mechanism screwed to an attachment.

In addition, the groove in the head of a male screw thread used in another portion in the main body of the communication apparatus or the outer shape of the head may be different from the groove in the head of the male screw thread in the attachment or the outer shape of the head.

Based on the above, it is not possible to detach or attach a male screw thread used in the communication apparatus by using a tool for detaching or attaching the male screw thread in the attachment. Thus, it is possible to prevent the communication apparatus from being easily disassembled.

In addition, the groove in the head of the male screw thread in the attachment may have a plus shape or a minus shape. The groove formed in the head of a male screw thread used in another portion in the main body of the communication apparatus may be a Y-shape.

Based on the above, it is not possible to detach or attach a male screw thread used in the main body of the communication apparatus by using a Phillips screwdriver or a slotted screwdriver for detaching or attaching the male screw thread of the screwing mechanism. Thus, it is possible to prevent the main body of the communication apparatus from being easily disassembled.

In addition, the groove in the head of a male screw thread exposed to the outside in the main body of the communication apparatus when the attachment is removed from the main body of the communication apparatus or the outer shape of the head may be at least different from the groove in the head of the male screw thread in the attachment or the outer shape of the head.

Based on the above, it is not possible to detach or attach a male screw thread exposed to the outside in the main body of the communication apparatus by using a tool for detaching or attaching the male screw thread of the screwing mechanism. Thus, it is possible to prevent the main body of the communication apparatus from being easily disassembled.

In addition, the communication apparatus may further include at least one latch portion. The latch portion is latched with the attachment by way of a positional relationship between the at least one latch portion and the attachment satisfying a particular relationship. In this case, the attachment may be fixed to the main body of the communication apparatus by the at least one screwing mechanism and the at least one latch portion.

Based on the above, it is possible to fix the attachment to the communication apparatus more firmly by a part of a screwing mechanism and a latch portion.

In addition, the part of one of the at least one screwing mechanism and one of the at least one latch portion may be at positions on opposite sides of a battery accommodation portion of the main body of the communication apparatus covered by the attachment.

Based on the above, the part of the screwing mechanism and the latch portion are at positions on opposite sides via a battery accommodation portion, whereby it is possible to certainly cover the battery accommodation portion with the attachment.

In addition, the communication apparatus may further include a protruding portion engaged with a protruding piece of the attachment. In this case, the part of the at least one screwing mechanism may be in the protruding portion.

Based on the above, the work for detaching or attaching the male screw thread of the screwing mechanism is facilitated.

In addition, the communication apparatus may further include a battery accommodation portion configured to detach or attach a battery from or to the communication apparatus. In this case, the attachment may be a battery cover configured to cover the battery accommodation portion. The engagement portion may be detachably engaged with the battery cover.

Based on the above, it is possible to form a communication apparatus to which an attachment that doubles as a battery cover can be selectively attached in accordance with use.

In addition, an outer frame shape of the main body of the communication apparatus may almost coincide with the shape of the battery cover.

Based on the above, it is possible to make a connection portion with an attachment less noticeable.

In addition, the vibrator may vibrate only in accordance with a signal received from another apparatus.

Based on the above, it is possible to notify the user of information by a vibration.

In another exemplary configuration of a communication apparatus according to the present invention, a communication apparatus includes a main body of the communication apparatus including a communicator configured to communicate with another apparatus, and a battery accommodation portion for accommodating a battery, and a detachable battery cover for covering the battery accommodation portion. The main body of the communication apparatus includes a first main portion and a protruding portion. The first main portion includes a first engagement portion, a first latch portion for latching the battery cover, and the battery accommodation portion. The protruding portion includes a first screw portion protruding from the first main portion and screwed to a second engagement portion and the battery cover. The battery cover includes a clip or a band threading portion, a second main portion, and a protruding piece. The clip is on an outer surface of the battery cover. Through the band threading portion, a band member can pass, and the band threading portion is on the outer surface. The second main portion includes a second latch portion that fits a third engagement portion, and the first latch portion that is engaged with the first engagement portion. The protruding piece protrudes from the second main portion and includes a fourth engagement portion screwed to the second engagement portion, and a second screw portion engaged with the first screw portion.

Based on the above, it is possible to form a communication apparatus to which a battery cover corresponding to use can be selectively attached. Further, it is possible to form a communication apparatus including a battery cover having a function (e.g., a clip function or a band fastening function) different from the function of covering a battery accommodation portion so that a battery is detachable from and attachable to the communication apparatus.

According to the present invention, it is possible to form a communication apparatus and a battery cover for enabling the expansion of use and the like.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a diagram showing an example of the external appearance of a communication system 1, which includes a communication apparatus according to an exemplary embodiment;
FIG. 2 is a diagram showing an example of the configuration of the communication system 1;
FIG. 3 is a top perspective view showing an example of a communication terminal 3 formed by combining a main body 30 and a first attachment 40;
FIG. 4 is a bottom perspective view showing an example of the communication terminal 3 formed by combining the main body 30 and the first attachment 40;
FIG. 5 is a side view showing an example of the communication terminal 3 formed by combining the main body 30 and the first attachment 40;
FIG. 6 is a bottom view showing an example of the communication terminal 3 formed by combining the main body 30 and the first attachment 40;
FIG. 7 is a top perspective view showing an example of the state where the first attachment 40 is removed from the main body 30;
FIG. 8 is a top perspective view showing an example of the communication terminal 3 formed by combining a main body 30 and a second attachment 50;
FIG. 9 is a bottom perspective view showing an example of the communication terminal 3 formed by combining the main body 30 and the second attachment 50;
FIG. 10 is a side view showing an example of the communication terminal 3 formed by combining the main body 30 and the second attachment 50;
FIG. 11 is a bottom view showing an example of the communication terminal 3 formed by combining the main body 30 and the second attachment 50;
FIG. 12 is a side view showing an example of the state where the ring diameter of a band mechanism assembled to the second attachment 50 is tightened;
FIG. 13 is a side view showing an example of the state where the ring diameter of the band mechanism assembled to the second attachment 50 is loosened;
FIG. 14 is a diagram showing an example of a data area set in a memory 24 of an information processing apparatus 2 in the exemplary embodiment;
FIG. 15 is a flow chart showing an example of processes performed by the information processing apparatus 2 in the exemplary embodiment; and
FIG. 16 is a flow chart showing an example of processes performed by the communication terminal 3 in the exemplary embodiment.

### DETAILED DESCRIPTION OF THE PREFERRED EMBODIMENTS

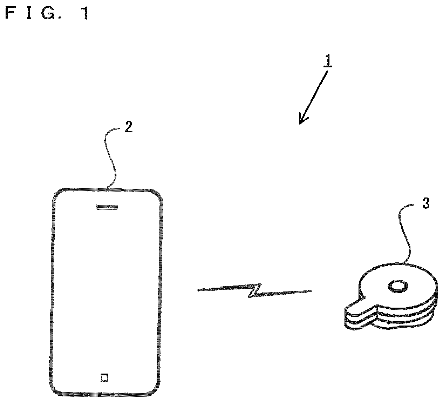

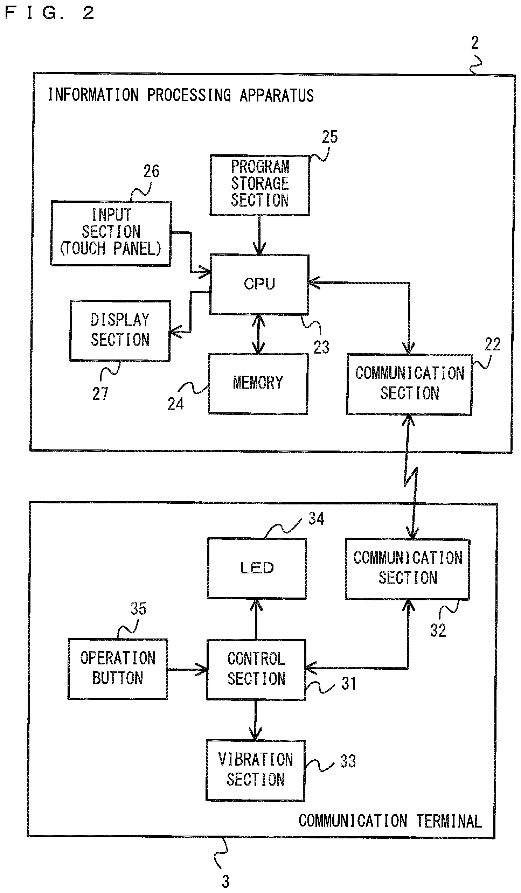

A description is given below of a communication apparatus and a battery cover according to an example of an exemplary embodiment. First, a description is given of the configuration of a communication system 1, which includes the communication apparatus. FIG. 1 is a diagram showing an example of the external appearance of the communication system 1, which includes the communication apparatus according to the exemplary embodiment. FIG. 2 is a diagram showing an example of the configuration of the communication system 1. As shown in FIGS. 1 and 2, the communication system 1 includes an information processing apparatus 2 and a communication terminal 3. The information processing apparatus 2 can perform wireless communication with the communication terminal 3. First, the communication terminal 3 can perform near field communication with the information processing apparatus 2.

In the exemplary embodiment, as an example of wireless communication, a case is described where the information processing apparatus 2 and the communication terminal 3 perform near field communication with each other. For example, the information processing apparatus 2 and the communication terminal 3 exchange data through wireless communication using a predetermined near field communication standard (e.g., Bluetooth (registered trademark)). As an example, if near field communication is performed, predetermined settings are made in the information processing apparatus 2 and the communication terminal 3, whereby the information processing apparatus 2 and the communication terminal 3 are paired with each other. The completion of the pairing enables the information processing apparatus 2 and the communication terminal 3 to perform wireless communication with each other.

The information processing apparatus 2 is any information processing apparatus capable of performing near field communication. In the exemplary embodiment, the information processing apparatus 2 may be a mobile (or portable) apparatus, e.g., a mobile phone such as a smartphone, a mobile information processing apparatus such as a tablet, or a mobile game apparatus, a stationary apparatus such as a personal computer or a home game machine, or a large-sized apparatus such as a commercial arcade game apparatus.

The communication terminal 3 is any apparatus capable of performing near field communication with the information processing apparatus 2 and operates using as a power supply a predetermined battery built into the communication terminal 3. In the exemplary embodiment, the communication terminal 3 is a small-sized apparatus that can be attached to the clothes or the body of a user, and includes a circuit for performing near field communication (an IC chip), means for giving a notification to the user (a lamp, a vibration apparatus, or the like), means for allowing the user to provide an operation input (an operation button or the like), and the like. It should be noted that the communication terminal 3 may have the function of storing data, the function of performing information processing, and the like.

An example of the configuration of the information processing apparatus 2 is described below. As shown in FIG. 2, the information processing apparatus 2 includes a communication section 22. The communication section 22 is used for near field communication with the communication terminal 3, generates a signal (radio waves) to be sent in accordance with an instruction from a CPU 23 described later, and sends the signal from the communication section 22. It should be noted that the communication section 22 may be configured to be attachable to and detachable from the information processing apparatus 2.

In addition, the information processing apparatus 2 includes a CPU 23 and a memory 24. The CPU 23 is an information processing section for performing various types of information processing to be performed by the information processing apparatus 2. The CPU 23 performs the various types of information processing using the memory 24.

The information processing apparatus 2 includes a program storage section 25. The program storage section 25 stores various programs (e.g., a communication program and an application program) to be executed by the information processing apparatus 2. The program storage section 25 is any storage device (storage medium) accessible by the CPU 23. The program storage section 25 may be a storage section built into the information processing apparatus 2, such as a hard disk or a memory, or may be a storage medium attachable to and detachable from the information processing apparatus 2, such as an optical disc or a cartridge, or may be both the storage section and the storage medium.

In addition, the information processing apparatus 2 includes an input section 26, which receives an instruction from a user, such as a button or a touch panel. Further, the information processing apparatus 2 includes a display section 27, which displays an image generated by the above information processing. For example, the input section 26 includes a touch panel for detecting a position on the display screen of the display section 27.

It should be noted that the information processing apparatus 2 may include a plurality of apparatuses. For example, in another exemplary embodiment, at least part of the information processing performed by the information processing apparatus 2 may be performed in a dispersed manner by a plurality of apparatuses capable of communicating with each other via a network (a wide-area network and/or a local network).

For example, the information processing apparatus 2 may be configured such that the CPU 23 can execute a plurality of programs such as an application program and a communication program. The application program is a program for executing any application for performing data communication with the communication terminal 3 and may be a game program for performing game processing in accordance with a user operation using the communication terminal 3. The communication program is a program for performing near field communication with the communication terminal 3. For example, the communication program is firmware or driver software for causing the communication section 22 to operate. The communication program receives an instruction from an application and causes the communication section 22 to perform an operation for communication.

Next, a description is given of an example of the configuration of the communication terminal 3. As shown in FIG. 2, the communication terminal 3 includes a communication section 32. The communication section 32 is used for near field communication with the information processing apparatus 2 and operates using as a power supply a battery built into the communication terminal 3. The communication section 32 generates a signal (radio waves) to be sent in accordance with an instruction from a control section 31 described later and sends the signal from the communication section 32.

The communication terminal 3 includes a vibration section 33 and an LED (light-emitting diode) 34. The vibration section 33 includes a vibration actuator (a vibrator) for imparting a predetermined vibration to the main body of the communication terminal 3 and operates using as a power supply a battery built into the communication terminal 3. The vibration section 33 drives the vibration actuator based on an instruction from the control section 31 described later. For example, the vibration actuator may use the method of generating a vibration by an eccentric motor (ERM: Eccentric Rotating Mass), the method of generating a vibration by a linear vibrator (LRA: Linear Resonant Actuator), the method of generating a vibration by a piezoelectric element, or the like. A driving signal corresponding to a method in which the vibration actuator generates a vibration is generated, whereby a vibration actuator using any method can impart various vibrations to the user of the communication terminal 3.

The LED 34 is provided on the upper surface of the main body of the communication terminal 3 and lights up using as a power supply a battery built into the communication terminal 3. The LED 34 lights up or goes out based on an instruction from the control section 31 described later. For example, the LED 34 can emit light of a plurality of colors, and the light emission colors are also controlled by the control section 31. As an example, the LED 34 may be able to represent any colors using blue, red, and green light-emitting diodes. Further, a plurality of LEDs 34 may be provided on the upper surface and/or another surface of the communication terminal 3.

The communication terminal 3 includes an operation button 35 as an example of an input section for receiving an instruction from the user. In accordance with the fact that the operation button 35 is subjected to a pressing operation, the operation button 35 outputs to the control section 31 a signal indicating that the operation button 35 is subjected to the pressing operation. As will be apparent later, in the exemplary embodiment, the LED 34 is provided within a press member of the press button 35. It should be noted that a plurality of input sections (e.g., operation buttons 35) may be provided on the upper surface and/or another surface of the communication terminal 3.

The communication terminal 3 includes a control section 31. In accordance with a signal received from the information processing apparatus 2 by the communication section 32, the control section 31 performs vibration control for controlling the operation of the vibration section 33 and performs light emission control for controlling the lighting, the extinguishing, and the light emission colors of the LED 34. Further, if the operation button 35 is subjected to a pressing operation, the control section 31 transmits from the communication section 32 to the information processing apparatus 2 a signal indicating that the operation button 35 is subjected to the pressing operation. It should be noted that the control section 31 operates using as a power supply a battery built into the communication terminal 3. The control section 31 may be a computer such as a microcomputer or may be composed of a dedicated circuit.

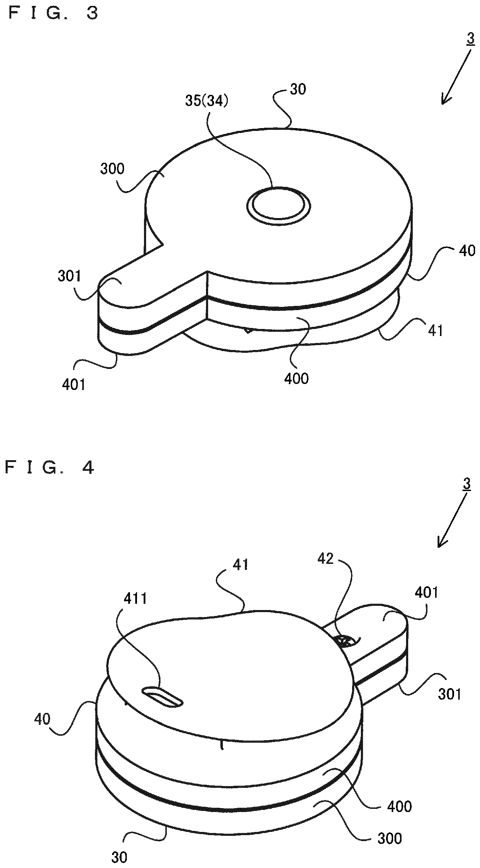

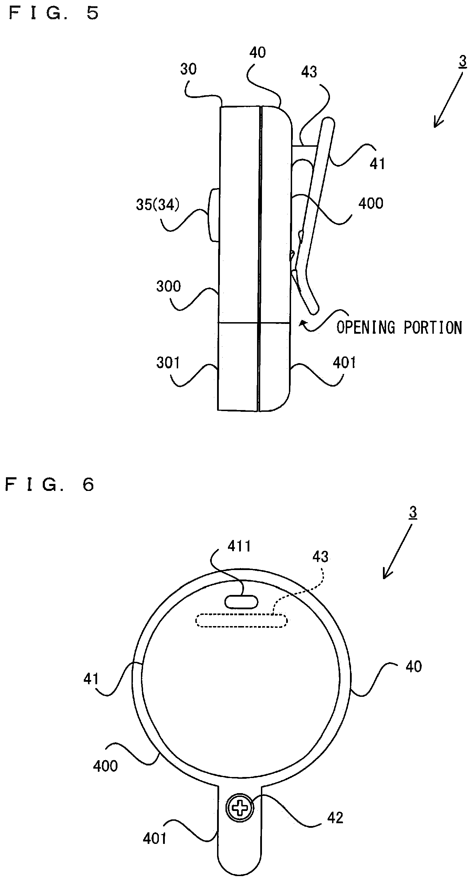

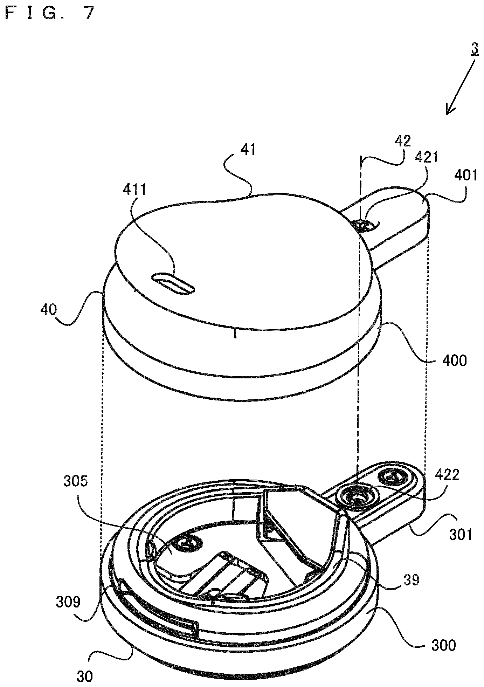

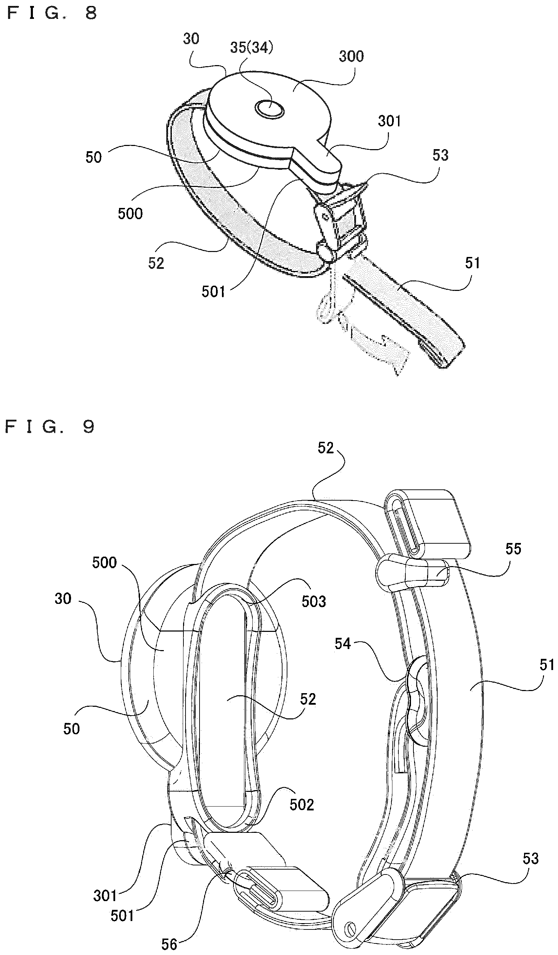

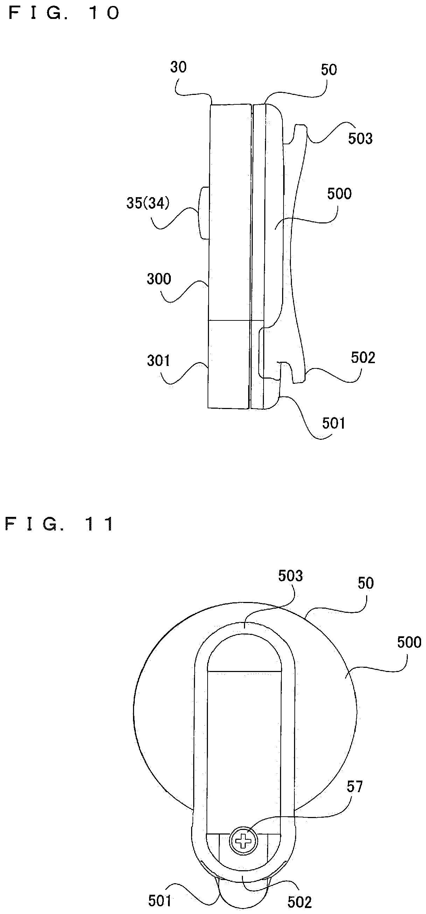

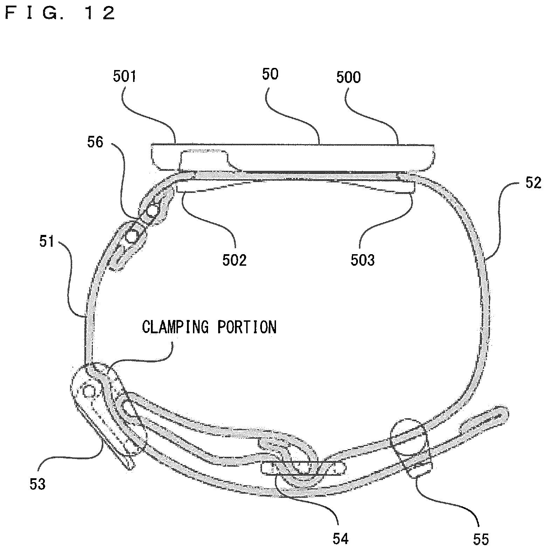

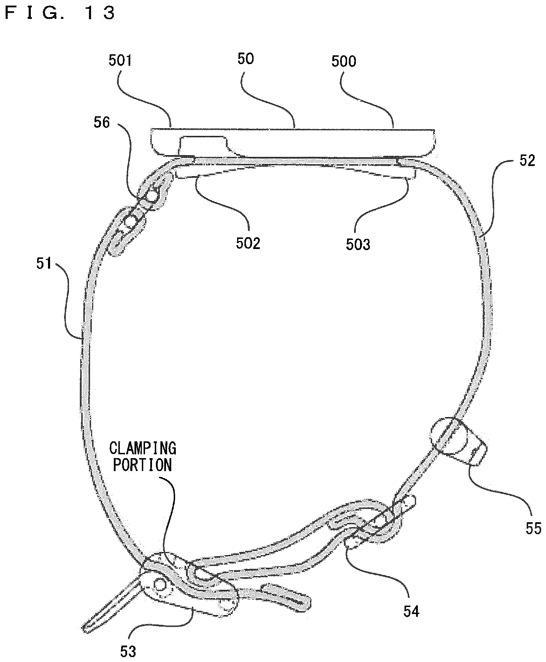

Next, with reference to FIGS. 3 to 13, a description is given of the external configuration of the communication terminal 3. It should be noted that FIG. 3 is a top perspective view showing an example of the communication terminal 3 formed by combining a main body 30 and a first attachment 40. FIG. 4 is a bottom perspective view showing an example of the communication terminal 3 formed by combining the main body 30 and the first attachment 40. FIG. 5 is a side view showing an example of the communication terminal 3 formed by combining the main body 30 and the first attachment 40. FIG. 6 is a bottom view showing an example of the communication terminal 3 formed by combining the main body 30 and the first attachment 40. FIG. 7 is a top perspective view showing an example of the state where the first attachment 40 is removed from the main body 30. FIG. 8 is a top perspective view showing an example of the communication terminal 3 formed by combining the main body 30 and a second attachment 50. FIG. 9 is a bottom perspective view showing an example of the communication terminal 3 formed by combining the main body 30 and the second attachment 50. FIG. 10 is a side view showing an example of the communication terminal 3 formed by combining the main body 30 and the second attachment 50. FIG. 11 is a bottom view showing an example of the communication terminal 3 formed by combining the main body 30 and the second attachment 50. FIG. 12 is a side view (some components shown in a side perspective view) showing an example of the state where the ring diameter of a band mechanism assembled to the second attachment 50 is tightened. FIG. 13 is a side view (some components shown in a side perspective view) showing an example of the state where the ring diameter of the band mechanism assembled to the second attachment 50 is loosened.

As shown in FIGS. 3 to 7, as a first form, the communication terminal 3 is formed by detachably engaging a main body 30 and a first attachment 40. The main body 30 is assembled to the first attachment 40 on the upper surface side of the communication terminal 3. The main body 30 includes a main portion 300 and a protruding portion 301, which protrudes from the main portion 300. Then, main functions such as the control section 31, the communication section 32, the vibration section 33, the LED 34, and the operation button 35, a battery, and the like are built into the main portion 300 of the main body 30. As shown in FIG. 3, in an almost central portion of the main portion 300 of the main body 30, a single operation button 35 into which the LED 34 is built is disposed. The press member of the operation button 35 is formed of a material that allows light to pass therethrough. Thus, if the LED 34 lights up, light passing through the press member is emitted, thereby enabling representation such that the operation button 35 itself lights up.

The first attachment 40 is, for example, a resin molding (e.g., an ABS resin molding) and is assembled to the main body 30 on the lower surface side of the communication terminal 3. The first attachment 40 has an outer frame shape that almost coincides with the outer frame shape of the main body 30. The first attachment 40 includes a main portion 400, which is engaged with the main portion 300 of the main body 30, and a protruding portion 401, which is engaged with the protruding portion (protruding piece) 301 of the main body 30.

On the lower surface of the first attachment 40, a clip 41 is provided. The clip 41 clamps another member between a part opposed to the lower surface of the first attachment 40 and the lower surface, and thereby can cause the member to clamp the first attachment 40 (i.e., the communication terminal 3 in which the main body 30 is combined). Then, as shown in FIG. 5, an opening portion of the clip 41 for inserting the member for clamping the first attachment 40 is formed in the direction in which the protruding portion 401 protrudes from the main portion 400. The opening portion of the clip 41 is thus formed, whereby, if the first attachment 40 is clamped by the clip 41 from above the member, the communication terminal 3 is attached to the member in the state where the protruding portion 401 (i.e., the protruding portion 301 of the main body 30) is directed downward relative to the main portion 400 (i.e., the main portion 300 of the main body 30).

The clip 41 is supported on the main portion 400 by a pillar portion 43, which is provided so as to stand on the outer surface of the main portion 400 (an outer surface of a cover portion for covering a battery accommodation portion 305 described later). As described above, the clip 41 has a structure in which the clip 41 is supported by the pillar portion 43, it is possible to form the clip 41 in a freer shape than a structure in which the clip 41 is integrated with the side surface of the main portion 400, and it is also easy to open and close the clip 41. For example, in the exemplary embodiment, the clip 41 is formed in an outer frame shape that almost coincides with the outer frame shape of the main portion 400 of the first attachment 40. This makes it possible to secure a relatively large clip area.

Further, for a connection portion with the pillar portion 43, a hole 411 is formed on the side opposed to the opening of the clip 41. For example, the hole 411 is provided to thread a string such as a strap thereinto and attaches the string thereto. Then, the hole 411 is formed on the side opposed to the opening of the clip 41, whereby, if the user holds the strap attached to the hole 411 or attaches the strap to the body of the user, the communication terminal 3 is attached in the state where the protruding portion 401 (i.e., the protruding portion 301 of the main body 30) is directed downward relative to the main portion 400 (i.e., the main portion 300 of the main body 30). That is, even if the communication terminal 3 is attached using the strap attached to the hole 411, it is possible to attach the communication terminal 3 without impairing the design qualities in the same direction as that in a case where the communication terminal 3 is attached by being clamped by the clip 41.

In addition, as shown in FIGS. 4, 6, and 7, in the protruding portion 301 of the main body 30 and the protruding portion 401 of the first attachment 40, a screwing mechanism 42 is provided. The screwing mechanism 42 screws and fixes the main body 30 and the first attachment 40. In the exemplary embodiment, a female screw thread portion 422 is formed in the protruding portion 301 of the main body 30, and a hole portion through which a male screw thread 421 that can be screwed to the female screw thread can pass and which has an inner diameter greater than the nominal diameter of the male screw thread 421 is formed in the protruding portion 401 of the first attachment 40. Then, the male screw thread 421 passed through the hole portion is screwed to the female screw thread portion 422 from the first attachment 40 side, thereby fixing the first attachment 40 to the main body 30 (it should be noted that either of the male screw thread portion and the female screw thread portion is referred to as a "screw portion"). As described above, the screwing mechanism 42 according to the exemplary embodiment includes the female screw thread portion 422 formed in the main body 30, the male screw thread 421 provided in the first attachment 40, and a hole portion which is formed in the first attachment 40 and through which the male screw thread 421 can pass. It should be noted that as is clear from FIGS. 6 and 7, the screwing mechanism 42 is provided in the protruding portion 401 of the first attachment 40, and therefore, even if a relatively large clip area is secured by forming the clip 41 in an outer frame shape that almost coincides with the outer frame shape of the main portion 400 of the first attachment 40, the position of the screwing mechanism 42 does not overlap the clip 41 when the lower surface of the first attachment 40 is viewed from front. Thus, the screwing mechanism 42 is provided in the protruding portion 401 of the first attachment 40, thereby facilitating the work of detaching or attaching the male screw thread 421 of the screwing mechanism 42. It should be noted that the screwing mechanism 42 may have a mechanism in which a female screw thread portion is formed on the first attachment 40 side, and a male screw thread is screwed from the main body 30 side. That is, in the screwing mechanism, if the screw portion of the first attachment 40 is a male screw thread, the screw portion of the main body 30 may be a female screw thread portion. Alternatively, in the screwing mechanism, if the screw portion on the first attachment 40 side is a female screw thread portion, the screw portion of the main body 30 may be a male screw thread.

It should be noted that the male screw thread 421 shown in FIG. 6 and the like is a Phillips screw in which a groove shape formed in the head thereof is plus-shaped, but may be of a type different from that of the head of a screw used within the main body 30. For example, the groove formed in the head of the male screw thread 421 or the outer shape of the head is of a type different from that of the groove formed in the head of a male screw thread used in the main body 30 or the outer shape of the head, whereby it is not possible to detach or attach the male screw thread used in the main body 30, using a tool for detaching or attaching the male screw thread 421. Thus, it is possible to prevent the inside of the main body 30 from being easily disassembled. As an example, if a groove shape formed in the head of the male screw thread 421 is a plus shape or a minus shape, it is possible to easily detach or attach the male screw thread 421 using a Phillips screwdriver or a slotted screwdriver. In contrast, if the groove formed in the head of the male screw thread shape used in the main body 30 is of a different shape (e.g., a so-called tamper-resistant screw such a Y-shape), it is not possible to detach or attach the male screw thread using a tool for detaching or attaching the male screw thread 421. It should be noted that not all the male screw threads used in the main body 30 may be of a type (e.g., a Y-shaped screw) different from that of the groove formed in the head of the male screw thread 421 or the outer shape of the head. Alternatively, at least a male screw thread of the main body 30 that is exposed to the outside when the first attachment 40 is removed from the main body 30 may be of this different type.

As shown in FIG. 7, if the first attachment 40 is removed from the main body 30, the inside of the main body 30 is exposed, and a battery accommodation portion 305, a packing 39, a latch portion 309, the female screw thread portion 422, and the like provided in the main body 30 are exposed. The battery accommodation portion 305 is a space for accommodating a battery (e.g., a coin-type lithium-ion battery (a button cell)) of a predetermined shape used as the power supply of the communication terminal 3. Within the space, an electrode for coming into contact with the positive electrode and the negative electrode of the battery is provided. For example, the battery accommodation portion 305 has a space where a coin-type battery can be accommodated in parallel with the upper surface and the lower surface of the communication terminal 3. If the first attachment 40 is attached to the main body 30, the battery accommodated in the battery accommodation portion 305 is pressed by the inner surface of the first attachment 40, thereby fixing the battery in the communication terminal 3. That is, the first attachment 40 functions as a battery cover for pressing a battery accommodated in the main body 30.

In a part which is the periphery of the battery accommodation portion 305 and in which the main body 30 abuts the first attachment 40, the packing 39 is provided. For example, the packing 39 is provided on the top surface of the main body 30 so as to surround the periphery of the battery accommodation portion 305. If the first attachment 40 is attached to the main body 30, the entire circumference of the packing 39 abuts the inner surface of the first attachment 40. In a part of the inner surface of the first attachment 40 that abuts the packing 39, an abutment flat surface (not shown) is formed. If the first attachment 40 is attached to the main body 30, the packing 39 tightly closes the inside of the battery accommodation portion 305 from the outside world. It should be noted that the packing 39 may be provided on the first attachment 40 side. Further, the packing 39 may only need to tightly close the inside of the battery accommodation portion 305 from the outside world, and may be another seal member such as a gasket.

On the outer side surface of the main body 30 that is opposed to the protruding portion 301, a latch portion 309 on one side is formed. For example, the latch portion 309 formed on the main body 30 side is formed so as to have a recessed shape from the outer side surface of the main body 30 toward the battery accommodation portion 305. Then, on the inner surface of the first attachment 40, at a position opposed to the latch portion 309 on the main body 30 side when the first attachment 40 is attached to the main body 30, a protruding portion (not shown) that fits and is latched with the recessed shape is formed as a latch portion 309 on the other side (the first attachment 40 side). As described above, the latch portions 309 formed in the main body 30 and the first attachment 40 are provided at, as viewed from the battery accommodation portion 305, positions on opposite sides (opposed surfaces) through the screwing mechanism 42 provided on the protruding portion 301 side and the battery accommodation portion 305. It should be noted that on the opposite sides, the latch portions 309 and the screwing mechanism 42 include positions on 180-degree opposite sides through the battery accommodation portion 305. These positions may be those on almost opposite sides, such as 175-degree opposite sides. Then, the male screw thread 421 is screwed to the female screw thread portion 422 in the state where the latch portions 309 fit together, thereby preventing the first attachment 40 from coming off in the up-down direction with respect to the main body 30 at the position opposed to the screwing mechanism 42. It should be noted that the latch portions 309 may be latched by forming a protruding shape portion on the main body 30 side and forming a recessed shape portion on the first attachment 40 side. Alternatively, instead of the latch portions 309, the screwing mechanism 42 may be provided, and screw portions at two places are screwed to each other, thereby fixing the first attachment 40 to the main body 30.

As shown in FIGS. 8 to 13, as a second form, the communication terminal 3 can be formed by attaching a second attachment 50 to a main body 30. For example, also in the second form, the communication terminal 3 is formed by detachably and attachably combining the main body 30 and the second attachment 50. That is, the communication terminal 3 is formed by combining the first attachment 40 with the main body 30 as the first form and formed by combining the second attachment 50 also with the main body 30 as the second form. Then, the communication terminal 3 can be used in a plurality of forms by the user freely detaching or attaching the first attachment 40 or the second attachment 50 from or to the main body 30.

As shown in FIG. 8, also in the communication terminal 3 in the second form, the main body 30 is assembled to the second attachment 50 on the upper surface side of the communication terminal 3. The main body 30 in the second form includes a main portion 300 and a protruding portion 301, which protrudes from the main portion 300. Then, main functions such as the control section 31, the communication section 32, the vibration section 33, the LED 34, and the operation button 35, a battery, and the like are built into the main portion 300 of the main body 30. It should be noted that the main body 30 in the second form is a device similar to the main body 30 in the first form and therefore is not described in detail here.

As shown in FIGS. 8 to 11, the second attachment 50 is, for example, a resin molding (e.g., an ABS resin molding) and is assembled to the main body 30 on the lower surface side of the communication terminal 3. The second attachment 50 has an outer frame shape that almost coincides with the outer frame shape of the main body 30. The second attachment 50 includes a main portion 500, which is engaged with the main portion 300 of the main body 30, and a protruding portion 501, which is engaged with the protruding portion 301 of the main body 30.

In addition, as shown in FIG. 11, similarly to the method for joining the first attachment 40 and the main body 30, a screwing mechanism 57 is provided in the protruding portion 301 of the main body 30 and the protruding portion 501 of the second attachment 50. Similarly to the screwing mechanism 42, the screwing mechanism 57 screws and fixes the main body 30 and the second attachment 50. A female screw thread portion is formed in the protruding portion 301 of the main body 30, and a male screw thread that can be screwed to the female screw thread is screwed from the second attachment 50 side. Then, in the protruding portion 501 of the second attachment 50, a hole portion having an inner diameter greater than the nominal diameter of the male screw thread is formed. As described above, in the exemplary embodiment, the screwing mechanism 57 includes a female screw thread portion 422 formed in the main body 30, a male screw thread provided in the second attachment 50, and a hole portion which is formed in the second attachment 50 and through which the male screw thread can pass. It should be noted that as shown in FIG. 11, the screwing mechanism 57 is provided between band threading portions 502 and 503 described later and at a position that does not overlap the band threading portions 502 and 503. This facilitates the work of detaching or attaching the male screw thread of the screwing mechanism 57. Further, on the inner surface of the second attachment 50, at a position opposed to a latch portion 309 on the main body 30 side when the second attachment 50 is attached to the main body 30, a protruding portion (not shown) that fits a recessed shape of the latch portion 309 is formed as a latch portion 309 on the second attachment 50 side. Further, also in a part of the inner surface of the second attachment 50 that abuts the packing 39, an abutment flat surface (not shown) is formed. If the second attachment 50 is attached to the main body 30, the packing 39 tightly covers the inside of the battery accommodation portion 305 from the outside world.

In a lower portion of the second attachment 50, strip-shaped band members 51 and 52 are assembled. The band members 51 and 52 are formed of soft strip-shaped members (e.g., strip-shaped members made of a fiber or strip-shaped members made of a synthetic resin) and are formed in a ring-shape so as to be assembled to the second attachment 50. Then, the band members 51 and 52 are so formed that the above ring diameter can be adjusted in a stepless manner by two length adjustment mechanisms 53 and 54. The ring diameter is adjusted, whereby it is possible to attach the band members 51 and 52 to the body (e.g., the wrist, the arm, the ankle, the leg, the neck, the head, the waist, or the like) of the user.

As shown in FIGS. 9, 12, and 13, the band members 51 and 52 are passed through a pair of band threading portions 502 and 503, thereby being assembled to the second attachment 50. For example, the band threading portion 502 is formed at a position in the second attachment 50 on the lower surface of the protruding portion 301 and is formed by integral molding using the same resin as the second attachment 50 (i.e., an ABS resin). Further, the band threading portion 503 is formed at a position in the second attachment 50 on the lower surface of the main portion 500 and a position opposed to the band threading portion 502, and is formed by integral molding using the same resin as the second attachment 50 (i.e., an ABS resin). Then, in each of the band threading portions 502 and 503, a band threading hole through which the band member 51 or 52 can pass in the front-rear direction of the second attachment 50 is formed. Consequently, if the band members 51 and 52 are passed through the band threading portions 502 and 503, the passing-through directions of the band members 51 and 52 are almost parallel with the direction connecting the position where the screwing mechanism 57 is provided and the positions where the latch portions 309 are provided. Thus, even under stress of the band members 51 and 52, it is possible to stably maintain the state where the second attachment 50 is fixed to the main body 30. Further, if the band members 51 and 52 are passed through the band threading portions 502 and 503, the band member 51 or 52 (a part of the band member 52 in FIGS. 9, 12, and 13) is assembled in the state where a part of the band member 51 or 52 is in contact with and along the lower surface of the second attachment 50. Thus, if the communication terminal 3 is attached to the user by winding the band members 51 and 52 around the wrist of the user, the second attachment 50 is fixed to the body of the user via the band member 51 or 52. Thus, it is possible to prevent the resin portion of the second attachment 50 from directly coming into contact with the body of the user. Further, also regarding the head of the male screw thread (see FIG. 11) exposed to the outside in the screwing mechanism 57, since the second attachment 50 is fixed to the body of the user via the band member 51 or 52, it is possible to prevent the head of the male screw thread from directly coming into contact with the body of the user.

It should be noted that the band members 51 and 52 may be formed so as to be attachable to and detachable from the second attachment 50. Alternatively, the band members 51 and 52 may be passed through the band threading portions 502 and 503 in the state where the band members 51 and 52 cannot be removed from the second attachment 50.

Next, with reference to FIGS. 12 and 13, a description is given of a ring diameter adjustment mechanism of the band members 51 and 52. As a mechanism for adjusting the ring diameter of the band members 51 and 52 and also attaching the communication terminal 3 to the body of the user, a first length adjustment mechanism 53, a second length adjustment mechanism 54, an end stop portion 55, and a joining member 56 are provided.

One end of the band member 51 is connected to one end of the band member 52 via the joining member 56. Further, the band member 51 is formed such that the length from the other end of the band member 52 can be adjusted in a stepless manner by the second length adjustment mechanism 54. Then, the band member 52 is passed through the pair of band threading portions 502 and 503, and the first length adjustment mechanism 53 is attached to the other end of the band member 52. Further, the first length adjustment mechanism 53 can be slid to any position in the band member 51. Then, the first length adjustment mechanism 53 includes a clamping portion for clamping the band member 51. The first length adjustment mechanism 53 is slid to any position in the band member 51 and clamps the band member 51, and thereby can fix the other end of the band member 52 and the band member 51 at any position. For example, as shown in FIG. 13, the first length adjustment mechanism 53 is slid in the direction of the other end of the band member 51 in the state where the clamping mechanism of the first length adjustment mechanism 53 is released, whereby it is possible to enlarge and loosen the ring diameter. On the other hand, as shown in FIG. 12, the ring diameter is loosened, and then, the first length adjustment mechanism 53 is slid in the direction of one end of the band member 51 in the state where the clamping mechanism of the first length adjustment mechanism 53 is released. Then, the first length adjustment mechanism 53 clamps the band member 51, whereby it is possible to reduce the ring diameter and also fix the ring diameter. Further, the end stop portion 55 includes an opening portion that stops the band member 51 sideways. The end stop portion 55 is loosely passed so as to be slidable to any position in the band member 52. Then, the end stop portion 55 fixes the ring diameter and then fits the other end of the band member 51 into the opening portion, and thereby can stop the other end of the band member 51 sideways along the band member 52. It should be noted that the joining member 56 is in the form of a ring made of a predetermined resin, whereby it is also possible to form the joining member 56 such that if stress equal to or greater than prescribed is applied to the band members 51 and 52, the joining member 56 ruptures.

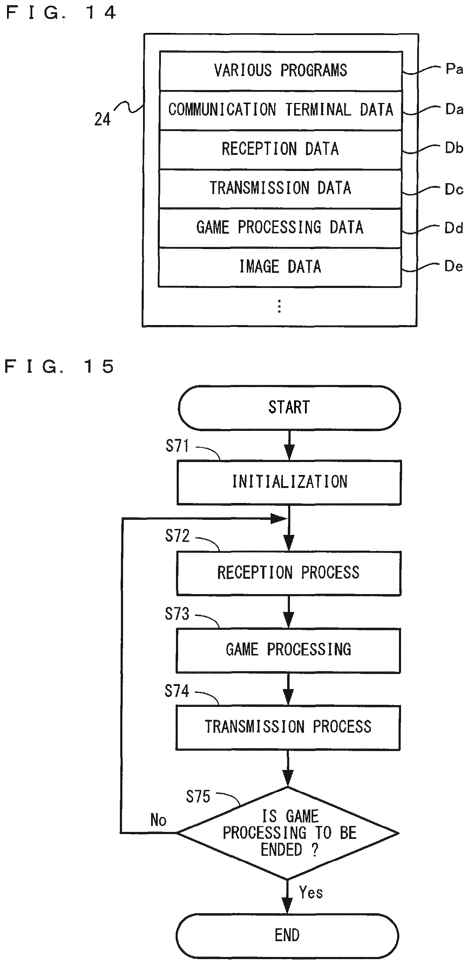

Next, with reference to FIGS. 14 to 16, a description is given of an example of specific processing performed by the communication system 1 (the information processing apparatus 2 and the communication terminal 3) in the exemplary embodiment. FIG. 14 is a diagram showing an example of a data area set in the memory 24 of the information processing apparatus 2 in the exemplary embodiment. It should be noted that the memory 24 stores, as well as data shown in FIG. 14, data used in other types of processing. The data, however, is not described in detail.

In a program storage area of the memory 24, various programs Pa to be executed by the information processing apparatus 2 are stored. In the exemplary embodiment, as the various programs Pa, the above communication program for performing near field communication, an application program for performing information processing (e.g., game processing) using the communication terminal 3, and the like are stored. It should be noted that the various programs Pa may be stored in advance in the program storage section 25, or may be acquired from a storage medium attachable to and detachable from the information processing apparatus 2 and stored in the memory 24, or may be acquired from another apparatus via a network such as the Internet and stored in the memory 24. The CPU 23 executes the various programs Pa stored in the memory 24.

Further, in a data storage area of the memory 24, various types of data used in the communication process and the information processing to be performed by the information processing apparatus 2 are stored. In the exemplary embodiment, the following are stored in the memory 24: communication terminal data Da; reception data Db; transmission data Dc; game processing data Dd; image data De; and the like.

The communication terminal data Da is data for performing wireless communication with the communication terminal 3 that can perform wireless communication with the information processing apparatus 2 as a result of being paired with the information processing apparatus 2. For example, the communication terminal data Da includes data (a pass key, a link key, and the like for each communication destination) necessary to perform wireless communication with a communication destination (the communication terminal 3), and may include ID data and the like for identifying a communication destination.

The reception data Db is data received from the communication terminal 3 through the wireless communication described above. The transmission data Dc is data to be transmitted to the communication terminal 3 through the wireless communication described above.

The game processing data Dd is data used when a game using the communication terminal 3 is performed. The image data De is data for displaying an image on the display section 27 when the game is performed.

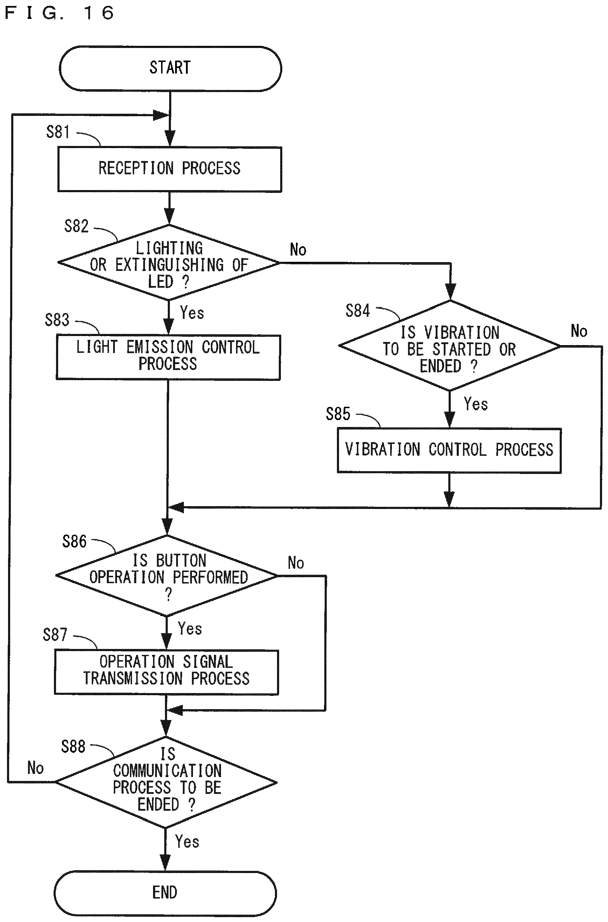

Next, detailed examples of processes in the exemplary embodiment are described. FIG. 15 is a flow chart showing an example of the processes (a communication process and game processing) performed by the information processing apparatus 2 in the exemplary embodiment. FIG. 16 is a flow chart showing an example of the processes (a communication process and a light emission/vibration control process) performed by the communication terminal 3 in the exemplary embodiment. In the exemplary embodiment, a series of processes shown in FIG 15 is performed by the CPU 23 executing the communication program and a predetermined application program included in the various programs Pa. It should be noted that the processes shown in FIGS. 15 and 16 are started at any timing. Further, in FIGS. 15 and 16, all the steps performed by the CPU 23 and the control section 31 are abbreviated as "S".

It should be noted that the processes of all the steps in the flow charts shown in FIGS. 15 and 16 are merely illustrative. Thus, the processing order of the steps may be changed, or another process may be performed in addition to (or instead of) the processes of all the steps, so long as similar results are obtained. Further, in the exemplary embodiment, a description is given on the assumption that the CPU 23 and the control section 31 perform the processes of all the steps in the flow charts. Alternatively, a processor or a dedicated circuit other than the CPU 23 and the control section 31 may perform the processes of some of the steps in the flow charts.

First, a description is given of the processes performed by the information processing apparatus 2. In FIG. 15, the CPU 23 performs initialization in processes (e.g., a communication process and game processing) using the communication terminal 3 (step 71), and the processing proceeds to the next step. For example, in the initialization, the CPU 23 sets, in the communication terminal data Da, data (a pass key, a link key, ID data of the communication terminal 3, and the like) necessary to perform wireless communication with the communication terminal 3 that can perform wireless communication as a result of being paired with the information processing apparatus 2, with respect to each communication terminal 3 with which the information processing apparatus 2 performs wireless communication. Further, the CPU 23 initializes parameters for performing the following processes (e.g., game processing using the communication terminal 3).

Next, the CPU 23 performs through wireless communication a reception process for receiving data from the communication terminal 3 (step 72), and the processing proceeds to the next step. For example, the CPU 23 performs the process of receiving data from each of communication terminals 3 capable of performing near field communication with the information processing apparatus 2, and of storing the received data in the reception data Db with respect to each communication terminal 3. As will be apparent later, if the operation button 35 provided in the communication terminal 3 is subjected to a pressing operation, the communication terminal 3 transmits a signal indicating that the operation button 35 is subjected to the pressing operation. Then, the signal is received in the above step 72.

Next, based on the reception data stored in the reception data Db and the like, the CPU 23 performs game processing (step 73), and the processing proceeds to the next step. For example, the CPU 23 performs the process of advancing a game in accordance with the state where the operation button 35 of the communication terminal 3 is subjected to a pressing operation, the number of communication terminals 3 capable of performing wireless communication with the information processing apparatus 2, the type of a communication terminal 3 capable of performing wireless communication with the information processing apparatus 2, the game situation, and the like. Then, the CPU 23 performs the process of generating a game image corresponding to the progress state of the game and displaying the game image on the display section 27. Further, in a case where the state of any one of communication terminals 3 is to be changed, such as a case where the LED 34 of any one of communication terminals 3 is to be changed from an extinguished state to a lighting state in accordance with the progress state of the game, a case where the lighting color of the LED 34 of any one of communication terminals 3 is to be changed, a case where the LED 34 of any one of communication terminals 3 is to be changed from a lighting state to an extinguished state, a case where the vibration of the vibration section 33 of any one of communication terminals 3 is to be started, or a case where the vibration of the vibration section 33 of any one of communication terminals 3 is to be ended, the CPU 23 generates command data indicating that the state of the communication terminal 3 is to be changed, and stores the command data together with the communication destination in the transmission data Dc.

Next, the CPU 23 performs the process of transmitting transmission data to the communication terminal 3 (step 74), and the processing proceeds to the next step. For example, with reference to the transmission data Dc, if transmission data is stored, the CPU 23, using the communication destination indicated by the transmission data and the communication terminal data Da for performing wireless communication with the communication destination, transmits the transmission data to the communication terminal 3 as the communication destination.

Next, the CPU 23 determines whether or not the game is to be ended (step 75). In the above step 75, examples of conditions for ending the game include: the fact that the result of the above game is settled; and the fact that the user performs the operation of ending the game. If the game is not to be ended, the CPU 23 returns to the above step 72 and repeats the process thereof. If the game is to be ended, the CPU 23 ends the processing of the flow chart. Then, the CPU 23 repeatedly performs the series of processes of steps 72 to 75 until it is determined in step 75 that the game is to be ended.

Next, a description is given of the processes performed by the communication terminal 3. In FIG. 16, the control section 31 performs through wireless communication a reception process for receiving data from the information processing apparatus 2 (step 81), and the processing proceeds to the next step. For example, the control section 31 receives, from an information processing apparatus 2 capable of performing near field communication with the communication terminal 3, data transmitted to the communication terminal 3. For example, as described above, there is a case where command data for changing the state of the communication terminal 3 is transmitted from the information terminal apparatus 2. If such command data is transmitted to the communication terminal 3, the command data is received in the above step 81.

Next, the control section 31 determines whether or not the command data received in the above step 81 indicates that the lighting state of the LED 34 is to be changed (step 82). For example, in a case where the command data indicates that the LED 34 is to be changed from an extinguished state to a lighting state, or that the LED 34 is to be changed from a lighting state to an extinguished state, or that the lighting color of the LED 34 is to be changed, the determination is affirmative in the above step 82. Then, if the command data indicates that the lighting state of the LED 34 is to be changed, the processing proceeds to step 83. If, on the other hand, the command data does not indicate that the lighting state of the LED 34 is to be changed, or command data transmitted to the communication terminal 3 is not received in the above step 81, the processing proceeds to step 84.

In step 83, the control section 31 performs the process of controlling the light emission of the LED 34, and the processing proceeds to step 86. For example, if the command data received in the above step 81 indicates that the LED 34 is to be changed from an extinguished state to a lighting state, the control section 31 performs control to light up the LED 34 using a light emission color indicated by the command data. Further, if the command data received in the above step 81 indicates that the LED 34 is to be changed from a lighting state to an extinguished state, the control section 31 performs control to extinguish the LED 34 in a lighting state. Further, if the command data received in the above step 81 indicates that the lighting color of the LED 34 is to be changed, the control section 31 performs control to change the lighting color of the LED 34 to a light emission color indicated by the command data.

On the other hand, in step 84, the control section 31 determines whether or not the command data received in the above step 81 indicates that the vibration state of the vibration section 33 is to be changed. For example, if the command data indicates that the vibration of the vibration section 33 is to be started, or that the vibration of the vibration section 33 is to be ended, the determination is affirmative in the above step 84. Then, if the command data indicates that the vibration state of the vibration section 33 is to be changed, the processing proceeds to step 85. If, on the other hand, the command data does not indicate that the vibration state of the vibration section 33 is to be changed, or command data transmitted to the communication terminal 3 is not received in the above step 81, the processing proceeds to step 86.

In step 85, the control section 31 performs the process of controlling the vibration of the vibration section 33, and the processing proceeds to step 86. For example, if the command data received in the above step 81 indicates that the vibration of the vibration section 33 is to be started, the control section 31 performs control to drive the vibration actuator of the vibration section 33 and impart a vibration to the user of the communication terminal 3. Further, if the command data received in the above step 81 indicates that the vibration of the vibration section 33 is to be stopped, the control section 31 performs control to stop the driving of the vibration actuator in a driven state.

In step 86, the control section 31 determines whether or not the operation button 35 is subjected to a pressing operation. For example, if a signal indicating that the operation button 35 is subjected to a pressing operation is output from the operation button 35, the control section 31 determines that the operation button 35 is subjected to a pressing operation. Then, if the operation button 35 is subjected to a pressing operation, the processing proceeds to step 87. If, on the other hand, the operation button 35 is not subjected to a pressing operation, the processing proceeds to step 88.

In step 87, the control section 31 performs the process of transmitting an operation signal, and the processing proceeds to step 88. For example, the control section 31 performs the process of generating a signal indicating that the operation button 35 is subjected to a pressing operation, and of transmitting the generated signal from the communication section 22 to the information processing apparatus 2 through wireless communication.

In step 88, the control section 31 determines whether or not the process is to be ended. In the above step 88, examples of conditions for ending the process include: the fact that the result of the above game is settled; and the fact that the user performs the operation of ending the process. If the process is not to be ended, the control section 31 returns to the above step 81 and repeats the process thereof. If the process is to be ended, the control section 31 ends the processing of the flow chart. Then, the control section 31 repeatedly performs the series of processes of steps 81 to 88 until it is determined in step 88 that the process is to be ended.

It should be noted that in the above description, the communication terminal 3 in the first form, in which the clip 41 is provided, and in the second form, in which the band members 51 and 52 are assembled, is used. Alternatively, the communication terminal 3 may be formed such that an attachment in another form is attachable to and detachable from the communication terminal 3. For example, the communication terminal 3 may be formed such that at least one of attachments in which a key ring, a hook, a suction member such as a suction cup, a wheel, a magnet, a pin, a clamp, and the like are provided may be attachable to and detachable from the communication terminal 3.

In addition, the shape of the communication terminal 3 described above is merely illustrative. Alternatively, the communication terminal 3 may have another shape. For example, two or more protruding portions protruding from the main portion may be formed. Yet alternatively, the shape of the main portion may be other than a disk shape. Further, a battery to be accommodated in the communication terminal 3 is not limited to a coin-type battery, and may be a battery of another shape such as a dry cell battery. The communication terminal 3 may have a shape corresponding to the battery to be accommodated.

In addition, in the communication terminal 3 described above, the vibration section 33, the LED 34, and the input section (the operation button 35) are provided. However, at least one in the group including these components may only need to be provided. Further, instead of or in addition to the group including these components, another input device (e.g., an acceleration sensor, a gyro sensor, a magnetic sensor, an optical sensor, or the like) or another informing device (e.g., a loudspeaker, a display screen, or the like) may be provided in the communication terminal 3. Further, the vibration section 33, the LED 34, and the operation button 35 are provided on the main body 30 side of the communication terminal 3. Alternatively, these functions may be provided on the attachment side.

In addition, the above descriptions have been given using an example where the information processing apparatus 2 and the communication terminal 3 each perform a communication process and information processing. Alternatively, another apparatus may perform at least some of the processing steps. For example, if the information processing apparatus 2 is further configured to communicate with another apparatus (e.g., another server, another information processing apparatus, another game apparatus, or another mobile terminal), the other apparatus may cooperate to perform the processing steps of the processing. Another apparatus may thus perform at least some of the processing steps, which enables processing similar to that described above. Further, the communication process and the information processing described above can be performed by a processor or the cooperation of a plurality of processors, the processor or the plurality of processors included in an information processing system including at least one information processing apparatus. Further, in the above exemplary embodiment, a communication process and information processing can be performed by the CPU 23 of the information processing apparatus 2 or the control section 31 of the communication terminal 3 executing a predetermined program. Alternatively, part or all of the processing of the flow charts may be performed by a dedicated circuit included in the information processing apparatus 2 or the communication terminal 3.

Here, the above variations make it possible to achieve the present invention also by a system form such as cloud computing, or a system form such as a distributed wide area network or a local area network. For example, in a system form such as a distributed local area network, it is possible to execute the processing between a stationary information processing apparatus (a stationary game apparatus) and a mobile information processing apparatus (a mobile game apparatus) by the cooperation of the apparatuses. It should be noted that, in these system forms, there is no particular limitation on which apparatus performs the above processing. Thus, it goes without saying that it is possible to achieve the present invention by sharing the processing in any manner.

In addition, the processing orders, the setting values, the conditions used in the determinations, and the like that are used in the information processing described above are merely illustrative. Thus, it goes without saying that the exemplary embodiment can be achieved also with other orders, other values, and other conditions.

In addition, the above program may be supplied to the information processing apparatus 2 and the communication terminal 3 not only through an external storage medium such as an external memory, but also through a wired or wireless communication link. Further, the program may be stored in advance in a non-volatile storage device included in the apparatus. It should be noted that examples of an information storage medium having stored therein the program may include CD-ROMs, DVDs, optical disk storage media similar to these, flexible disks, hard disks, magneto-optical disks, and magnetic tapes, as well as non-volatile memories. Alternatively, an information storage medium having stored therein the program may be a volatile memory for storing the program. It can be said that such a storage medium is a storage medium readable by a computer or the like. For example, it is possible to provide the various functions described above by causing a computer or the like to load a program from the storage medium and execute it.

While the present invention has been described in detail above, the above descriptions are merely illustrative in all respects, and do not limit the scope of the present invention. It is needless to say that the present invention can be improved and modified in various manners without departing the scope thereof. It is understood that the scope of the present invention should be interpreted only by the scope of the claims. Further, it is understood that the specific descriptions of the embodiments of the present invention enable a person skilled in the art to carry out an equivalent scope on the basis of the descriptions of the present invention and general technical knowledge. Furthermore, it should be understood that, unless otherwise stated, the terms used in the specification are used in their common meanings in the field. Thus, unless otherwise defined, all the jargons and the technical terms used in the specification have the same meanings as those generally understood by a person skilled in the art in the field of the present invention. If there is a conflict, the specification (including definitions) takes precedence.

As described above, the present invention can be used as, for example, a communication apparatus, a battery cover, and the like in order, for example, to enable the expansion of use and the like.

## Claims

1. A communication apparatus (30) capable of communicating with another apparatus (2), the communication apparatus comprising:
an engagement portion (300, 301) detachably engaged with one of a plurality of types of attachments (40, 50) in a selective manner;
a communicator (32) configured to communicate with the other apparatus; and
a vibrator (33) configured to vibrate in accordance with a signal received from the other apparatus,
**characterized by**
a part of at least one screwing mechanism (42) configured to be screwed to the attachment to fix the attachment to a main body of the communication apparatus, and
at least one latch portion (309) latched with the attachment by way of a positional relationship between the at least one latch portion and the attachment satisfying a particular relationship, wherein the attachment is fixed to the main body of the communication apparatus by the at least one screwing mechanism and the at least one latch portion, and wherein the part of one of the at least one screwing mechanism and one of the at least one latch portion are at positions on opposite sides of a battery accommodation portion (305) of the main body of the communication apparatus covered by the attachment.

2. The communication apparatus according to claim 1, further comprising:
a light-emitting diode (34); and
a light emission controller (31) configured to control light emission of the light-emitting diode in accordance with the signal received from the other apparatus by the communicator.

3. The communication apparatus according to claim 2, wherein the light-emitting diode is configured to emit light of a plurality of colors, and the light emission controller is configured to control a light emission color of the light-emitting diode in accordance with the signal received from the other apparatus by the communicator.

4. The communication apparatus according to claim 2 or 3, further comprising an operation button (35) on which a user can perform a pressing operation, wherein
the light-emitting diode is built into the operation button.

5. The communication apparatus according to any one of claims 1 to 3, further comprising a single operation button on which a user can perform a pressing operation.

6. The communication apparatus according to claim 4 or 5, wherein
the communicator is configured to transmit a signal to the other apparatus indicating that the operation button is subjected to a pressing operation when the operation button is pressed.

7. The communication apparatus according to claims 1, further comprising a protruding portion engaged with a protruding piece of the attachment, wherein
the part of the at least one screwing mechanism is in the protruding portion.

8. The communication apparatus according to any one of claims 1 to 7, wherein the battery accommodation portion is further configured to detach or attach a battery from or to the communication apparatus, wherein
the attachment is a battery cover configured to cover the battery accommodation portion, and
the engagement portion is detachably engaged with the battery cover.

## Patentansprüche

1. Kommunikationsvorrichtung (30), die in der Lage ist, mit einer anderen Vorrichtung (2) zu kommunizieren, wobei die Kommunikationsvorrichtung umfasst:
einen Eingriffsabschnitt (300, 301), der mit einem von mehreren Arten von Zubehörteilen (40, 50) in selektiver Weise lösbar in Eingriff steht;
einen Kommunikator (32), der konfiguriert ist zum Kommunizieren mit der anderen Vorrichtung; und
einen Vibrator (33), der so konfiguriert ist, dass er in Übereinstimmung mit einem von der anderen Vorrichtung empfangenen Signal vibriert,
**gekennzeichnet durch**
ein Teil mindestens eines Schraubmechanismus (42), der so konfiguriert ist, dass er an das Zubehörteil geschraubt werden kann, um das Zubehörteil an einem Hauptkörper der Kommunikationsvorrichtung zu befestigen, und
mindestens einen Verriegelungsabschnitt (309), der mit dem Zubehörteil mittels einer Positionsbeziehung zwischen dem mindestens einen Verriegelungsabschnitt und dem Zubehörteil verriegelt ist, die eine bestimmte Beziehung erfüllt, wobei das Zubehörteil an dem Hauptkörper der Kommunikationsvorrichtung durch den mindestens einen Schraubmechanismus und den mindestens einen Verriegelungsabschnitt befestigt ist,
und wobei der Teil des mindestens einen Schraubmechanismus und der mindestens eine Verriegelungsabschnitt sich an Positionen auf gegenüberliegenden Seiten eines Batterieaufnahmeabschnitts (305) des Hauptkörpers der Kommunikationsvorrichtung befinden, der durch das Zubehörteil abgedeckt ist.

2. Kommunikationsvorrichtung nach Anspruch 1, ferner umfassend:
eine Leuchtdiode (34); und
eine Lichtemissionssteuerung (31), die so konfiguriert ist, dass sie eine Lichtemission der Leuchtdiode in Übereinstimmung mit dem von der anderen Vorrichtung durch den Kommunikator empfangenen Signal steuert.

3. Kommunikationsvorrichtung nach Anspruch 2, wobei die Leuchtdiode so konfiguriert ist, dass sie Licht einer Vielzahl von Farben emittiert, und die Lichtemissionssteuerung so konfiguriert ist, dass sie eine Lichtemissionsfarbe der Leuchtdiode in Übereinstimmung mit dem von der anderen Vorrichtung durch den Kommunikator empfangenen Signal steuert.

4. Kommunikationsvorrichtung nach Anspruch 2 oder 3, die ferner eine Betätigungstaste (35) umfasst, an der ein Benutzer einen Druckvorgang ausführen kann, wobei
die Leuchtdiode in die Betätigungstaste eingebaut ist.

5. Kommunikationsvorrichtung nach einem der Ansprüche 1 bis 3, der ferner eine einzige Betätigungstaste umfasst, auf der ein Benutzer einen Druckvorgang ausführen kann.

6. Kommunikationsvorrichtung nach Anspruch 4 oder 5, wobei der Kommunikator so konfiguriert ist, dass er ein Signal an die andere Vorrichtung überträgt, das anzeigt, dass die Betätigungstaste einem Druckvorgang unterzogen wird, wenn die Betätigungstaste gedrückt wird.

7. Kommunikationsvorrichtung nach Anspruch 1, die ferner einen vorstehenden Abschnitt aufweist, der mit einem vorstehenden Stück des Zubehörteils in Eingriff steht, wobei
der Teil des mindestens einen Schraubmechanismus sich im vorstehenden Teil befindet.

8. Kommunikationsvorrichtung nach einem der Ansprüche 1 bis 7, wobei der Batterieaufnahmeteil ferner so konfiguriert ist, dass er eine Batterie von der Kommunikationsvorrichtung ab- oder an sie anschließt, wobei der Aufsatz ein Batteriedeckel ist, der so konfiguriert ist, dass er den Batterieaufnahmeteil abdeckt, und
der Eingriffsabschnitt lösbar mit dem Batteriedeckel verbunden ist.

## Revendications

1. Un appareil de communication (30) capable de communiquer avec un autre appareil (2), l'appareil de communication comprenant :
une partie d'emboîtement (300, 301) emboîtée de manière détachable avec l'un d'une pluralité de types d'accessoires (40, 50) d'une manière sélective ;
un communicateur (32) configuré pour communiquer avec l'autre appareil ; et
un vibreur (33) configuré pour vibrer en fonction d'un signal reçu en provenance de l'autre appareil,
**caractérisé par**
une partie d'au moins un mécanisme vissant (842) configurée pour être vissé sur l'accessoire pour fixer l'accessoire à un corps principal de l'appareil de communication, et
au moins une partie de verrou (309) verrouillée avec l'accessoire par le fait qu'une relation de position entre l'au moins une partie de verrou et l'accessoire vérifie une relation particulière, l'accessoire étant fixé au corps principal de l'appareil de communication par l'au moins un mécanisme vissant et l'une des au moins une partie de verrouillage étant située en des positions sur des côtés opposés d'une partie de logement de batterie (305) du corps principal de l'appareil de communication recouverte par l'accessoire.

2. L'appareil de communication selon la revendication 1, comprenant en outre :
une diode électroluminescente (34) ; et
un contrôleur d'émission lumineuse (31) configuré pour contrôler l'émission lumineuse de la diode électroluminescente en fonction du signal reçu par le communicateur en provenance de l'autre appareil.

3. L'appareil de communication selon la revendication 2, dans lequel la diode électroluminescente est configurée pour émettre une lumière d'une pluralité de couleurs, et le contrôleur d'émission lumineuse est configuré pour contrôler une couleur de lumière émise par la diode électroluminescente en fonction du signal reçu en provenance de l'autre appareil par le communicateur.

4. L'appareil de communication selon la revendication 2 ou 3, comprenant en outre un bouton d'actionnement (35) sur lequel un utilisateur peut exercer une action d'appui, la diode électroluminescente étant incorporée au bouton d'actionnement.

5. L'appareil de communication selon l'une des revendications 1 à 3, comprenant en outre un bouton d'actionnement unique sur lequel un utilisateur peut exercer une action d'appui.

6. L'appareil de communication selon la revendication 4 ou 5, dans lequel le communicateur est configuré pour transmettre à l'autre appareil un signal indiquant que le bouton d'actionnement est soumis à une action d'appui lorsque le bouton d'actionnement est enfoncé.

7. L'appareil de communication selon la revendication 1, comprenant en outre une partie saillante emboîtée sur une pièce saillante de l'accessoire, la partie de l'au moins un mécanisme vissant se trouvant dans la partie saillante.

8. L'appareil de communication selon l'une des revendications 1 à 7, dans lequel la partie de logement de batterie est en outre configurée pour pouvoir y monter ou démonter une batterie de l'appareil de communication, dans lequel
l'accessoire est un capot de batterie configuré pour couvrir la partie de logement de batterie, et
la partie d'emboîtement est emboîtée de manière détachable avec le capot de batterie.
